# EUROPEAN PATENT APPLICATION

(11) **EP 4 691 629 A1**
(43) Date of publication of application: **11.02.2026**
(21) Application number: 24779158.5
(22) Date of filing: 05.03.2024
(51) Int. Cl.: B01J 23/755, B01D 53/86, B01D 53/94, B01J 23/78, B01J 23/80, B01J 23/83, B01J 23/889

(54) **NITROUS OXIDE DECOMPOSITION CATALYST AND METHOD FOR DECOMPOSING NITROUS OXIDE**

(30) Priority: 30.03.2023 JP 2023055605; 05.07.2023 JP 2023110590
(71) Applicant: Kanadevia Corporation, Osaka-shi, Osaka 559-8559 (JP)
(72) Inventor: SHIMIZU, Kana, Osaka-shi Osaka 5598559 (JP); SHONO, Emi, Osaka-shi Osaka 5598559 (JP); NISHI, Tsugumi, Osaka-shi Osaka 5598559 (JP)
(74) Representative: Grünecker Patent- und Rechtsanwälte PartG mbB
(86) International application number: PCT/JP2024/008243
(87) International publication number: WO 2024/203020

(57) **Abstract**

A nitrous oxide decomposition catalyst contains a compound represented by the following formula (1).

Ni_{X}A_{1-X}Co₂O₄ (1)

(In the formula (1), A is at least one selected from the group consisting of Fe, Mn, Ce, Zr, La, an alkali metal, and an alkaline earth metal. X is more than 0 and less than 1.)

## Description

### TECHNICAL FIELD

The present invention relates to a nitrous oxide decomposition catalyst and a method of decomposing nitrous oxide.

### BACKGROUND ART

Conventionally, in order to treat exhaust gas, a technique is known in which a catalyst for treating exhaust gas is disposed in an exhaust passage through which exhaust gas flows to decompose harmful substances in the exhaust gas.

For example, as a decomposition method of nitrous oxide (N₂O) contained in exhaust gas, a decomposition method using a nitrous oxide decomposition catalyst containing cobalt, nickel, and copper has been proposed (see, for example, Patent Document 1).

The method of decomposing nitrous oxide using the nitrous oxide decomposition catalyst of Patent Document 1 can decompose nitrous oxide under the condition of a relatively low temperature.

### Citation List

### Patent Document

Patent Document 1: Japanese Unexamined Patent Publication No. 2022-098865

### SUMMARY OF THE INVENTION

### PROBLEM TO BE SOLVED BY THE INVENTION

However, in the method of decomposing nitrous oxide using the nitrous oxide decomposition catalyst of Patent Document 1, there is a problem that the nitrous oxide cannot be sufficiently decomposed under the condition that the exhaust gas contains moisture that the exhaust gas normally contains.

The present invention provides a nitrous oxide decomposition catalyst and a method of decomposing nitrous oxide, which are capable of sufficiently decomposing nitrous oxide in exhaust gas under the condition of a relatively low temperature even when the exhaust gas contains moisture.

### MEANS FOR SOLVING THE PROBLEM

The present invention [1] includes a nitrous oxide decomposition catalyst comprising: a compound represented by the following formula (1).

NiₓA₁₋ₓCo₂O₄ (1)

(In the formula (1), A is at least one selected from the group consisting of Fe, Mn, Ce, Zr, La, an alkali metal, and an alkaline earth metal. X is more than 0 and less than 1.)

The present invention [2] includes the nitrous oxide decomposition catalyst described in the above-described [1], wherein in the formula (1), X is 0.75 or more.

The present invention [3] includes the nitrous oxide decomposition catalyst described in the above-described [1], wherein the A is at least one selected from the group consisting of Fe, Mn, Sr, Cs, and La.

The present invention [4] includes a nitrous oxide decomposition catalyst comprising: a compound represented by the following formula (2).

Mg_{Y}B_{1-Y}Co₂O₄ (2)

(In the formula (1), B is at least one selected from the group consisting of Fe, Mn, Zn, Ni, Zr, La, an alkali metal, and an alkaline earth metal (excluding Mg). Y is more than 0 and less than 1.)

The present invention [5] includes the nitrous oxide decomposition catalyst described in the above-described [4], wherein in the formula (2), Y is 0.75 or more.

The present invention [6] includes the nitrous oxide decomposition catalyst described in the above-described [4], wherein the B is at least one selected from the group consisting of Zn and Ni.

The present invention [7] includes a method of decomposing nitrous oxide comprising: a step of decomposing nitrous oxide in exhaust gas by using the nitrous oxide decomposition catalyst described in any one of the above-described [1] to [6].

The present invention [8] includes the method of decomposing nitrous oxide described in the above-described [7], wherein a concentration of H₂O in the exhaust gas is 5% by volume or more, and wherein in the step of decomposing nitrous oxide, a decomposition temperature is 450°C or less.

### EFFECTS OF THE INVENTION

The nitrous oxide decomposition catalyst of the present invention can sufficiently decompose the nitrous oxide in exhaust gas under the condition of a relatively low temperature even when the exhaust gas contains moisture.

The method of decomposing nitrous oxide of the present invention includes a step of decomposing nitrous oxide in exhaust gas by using the above-described nitrous oxide decomposition catalyst. Therefore, even when the exhaust gas contains moisture, nitrous oxide in the exhaust gas can be sufficiently decomposed under the condition of a relatively low temperature.

### BRIEF DESCRIPTION OF THE DRAWINGS

FIG. 1 shows a graph of the X-ray diffraction (XRD) patterns of nitrous oxide decomposition catalysts of Examples 1, 5, 7, 12, and 14.
FIG. 2 shows a graph of the X-ray diffraction (XRD) patterns of nitrous oxide decomposition catalysts of Example 1 and Comparative Example 2.

### DESCRIPTION OF THE EMBODIMENTS

### 1. Nitrous Oxide Decomposition Catalyst

A nitrous oxide decomposition catalyst is a catalyst that decomposes nitrous oxide (N₂O) in exhaust gas into nitrogen (N₂) and oxygen (O₂).

### <First Embodiment>

The nitrous oxide decomposition catalyst of the first embodiment includes a compound represented by the following formula (1).

NiₓA₁₋ₓCo₂O₄ (1)

(In the formula (1), A is at least one selected from the group consisting of Fe, Mn, Ce, Zr, La, an alkali metal, and an alkaline earth metal. X is more than 0 and less than 1.)

As described above, the nitrous oxide decomposition catalyst of the first embodiment includes dicobalt tetraoxide, Ni, and A which is described later.

A is at least one selected from the group consisting of Fe, Mn, Ce, Zr, La, an alkali metal, and an alkaline earth metal.

Examples of the alkali metal include, for example, Cs, K, Rb, and Na.

Examples of the alkaline earth metal include, for example, Mg, Ca, Sr, and Ba.

A is preferably at least one selected from the group consisting of Fe, Mn, Ce, Zr, La, Cs, Ca, Sr, and Ba, more preferably at least one selected from the group consisting of Fe, Mn, Ce, Zr, La, Cs, and Sr, even more preferably at least one selected from the group consisting of Fe, Ce, Zr, La, and Cs, and particularly preferably Fe.

As long as A includes the above-described element, the nitrous oxide decomposition catalyst of the first embodiment can sufficiently decompose the nitrous oxide in exhaust gas under the condition of a relatively low temperature even when the exhaust gas contains moisture. Specifically, as long as A includes the above-described element, the nitrous oxide decomposition catalyst of the first embodiment can improve the decomposition rate of nitrous oxide in the exhaust gas under the conditions that the exhaust gas has a relatively low temperature and contains moisture.

Furthermore, from the viewpoint of durability against sulfur dioxide (SO₂), A is preferably at least one selected from the group consisting of Fe, Mn, Sr, Cs, and La, and more preferably at least one selected from the group consisting of Fe, Sr, and La.

Specifically, as long as A includes the above-described element, even after the nitrous oxide decomposition catalyst of the first embodiment is exposed to a sulfur dioxide (SO₂)-containing gas (described later), the nitrous oxide decomposition catalyst can sufficiently decompose nitrous oxide in exhaust gas under the conditions that the exhaust gas has a relatively low temperature and contains moisture. That is, it is suggested that as long as A includes the above-described element, the nitrous oxide decomposition catalyst of the first embodiment improves the decomposition rate of nitrous oxide in the exhaust gas under the conditions that the exhaust gas has a relatively low temperature and contains sulfur dioxide (SO2) and moisture.

In the above formula (1), X is more than 0, preferably 0.25 or more, more preferably 0.50 or more, even more preferably 0.75 or more, and particularly preferably 0.90 or more. X is less than 1, preferably 0.95 or less.

When X is within the above-described range, the decomposition rate of nitrous oxide can be improved under the conditions that the exhaust gas has a relatively low temperature and contains moisture. From the viewpoint of durability against sulfur dioxide (SO₂), X is preferably within the above-described range.

In the above-described formula (1), when A is Mg, the elements are the same as those of the following formula (2). However, when X is 0.5 or more, the compound is included in the first embodiment, and when X is less than 0.5, the compound is included in the second embodiment described later. Preferably A does not contain Mg. In such a case, the formula (1) is as follows.

NiₓA₁₋ₓCo₂O₄ (1)

(In the formula (1), A is at least one selected from the group consisting of Fe, Mn, Ce, Zr, La, an alkali metal, and an alkaline earth metal (excluding Mg). X is more than 0 and less than 1.)

In the nitrous oxide decomposition catalyst of the first embodiment, the compound of the formula (1) forms, for example, a spinel structure. The spinel structure is one of the crystalline structures found in metallic oxides, and is, for example, a structure of tricobalt tetraoxide (Co₃O₄). Specifically, the compound of the formula (1) forms a spinel structure in which Co, Ni, and A form a solid solution, and some of Co elements are substituted with Ni and/or A in tricobalt tetraoxide (Co₃O₄).

### <Second Embodiment>

A nitrous oxide decomposition catalyst of the second embodiment includes a compound represented by the following formula (2).

Mg_{Y}B_{1-Y}Co₂O₄ (2)

(In the formula (2), B is at least one selected from the group consisting of Fe, Mn, Zn, Ni, Zr, La, an alkali metal, and an alkaline earth metal (excluding Mg). Y is more than 0 and less than 1.)

As described above, the nitrous oxide decomposition catalyst of the second embodiment includes bicobalt tetraoxide, Mg, and B which is described later.

B is at least one selected from the group consisting of Fe, Mn, Zn, Ni, Zr, La, an alkali metal, and an alkaline earth metal (excluding Mg).

Examples of the alkali metal include Cs, K, Rb, and Na.

Examples of the alkaline earth metal (excluding Mg) include Ca, Sr, and Ba.

B is preferably at least one selected from the group consisting of Fe, Zn, Ni, and Sr, more preferably at least one selected from the group consisting of Zn and Ni, and even more preferably Zn.

As long as B includes the above-described element, the nitrous oxide decomposition catalyst of the second embodiment can sufficiently decompose nitrous oxide in exhaust gas under the condition of a relatively low temperature even when the exhaust gas contains moisture. Specifically, as long as B includes the above-described element, the nitrous oxide decomposition catalyst of the second embodiment can improve the decomposition rate of nitrous oxide in the exhaust gas under the conditions that the exhaust gas has a relatively low temperature and contains moisture.

Furthermore, B is preferably at least one selected from the group consisting of Zn and Ni from the viewpoint of durability against sulfur dioxide (SO₂).

In Formula (2), Y is more than 0, preferably 0.25 or more, more preferably 0.50 or more, even more preferably 0.75 or more, and particularly preferably 0.90 or more. Y is less than 1, preferably 0.95 or less.

Specifically, as long as B includes the above-described element, even after the nitrous oxide decomposition catalyst of the second embodiment is exposed to a sulfur dioxide (SO₂)-containing gas (described later), the nitrous oxide decomposition catalyst can sufficiently decompose the nitrous oxide in exhaust gas under the conditions that the exhaust gas has a relatively low temperature and contains moisture. That is, as long as B includes the above-described element, it is suggested that the nitrous oxide decomposition catalyst of the second embodiment improves the decomposition rate of nitrous oxide in exhaust gas under the conditions that the exhaust gas has a relatively low temperature and contains sulfur dioxide (SO2) and moisture.

When Y is within the above-described range, the decomposition rate of nitrous oxide in exhaust gas can be improved under the conditions that the exhaust gas has a relatively low temperature and contains moisture. From the viewpoint of durability against sulfur dioxide (SO₂), Y is preferably within the above-described range.

In the above-described formula (2), when B is Ni, the elements are the same as those of the above-described formula (1). When Y is 0.5 or more, the compound is included in the second embodiment. When Y is less than 0.5, the compound is included in the first embodiment. Furthermore, when B is Ni, Y is preferably 0.75 or more, more preferably 0.9 or more, and less than 1, preferably 0.95 or less. In such a case, the formula (2) is as follows.

Mg_{Y}B_{1-Y}Co₂O₄ (2)

(In the formula (2), B is at least one selected from the group consisting of Fe, Mn, Zn, Ni, Zr, La, an alkali metal, and an alkaline earth metal (excluding Mg). Y is more than 0 and less than 1. When B is Ni, Y is 0.5 or more and less than 1.)

In the nitrous oxide decomposition catalyst of the second embodiment, the compound of the above-described formula (2) forms, for example, a spinel structure. The spinel structure is one of the crystalline structures found in the oxides of metal elements, and is, for example, a structure of tricobalt tetraoxide (Co₃O₄). Specifically, the compound of the above-described formula (2) forms a spinel structure in which Co, Mg, and B form a solid solution, and some of Co elements are substituted with Mg and/orB in tricobalt tetraoxide (Co₃O₄).

An additive may be added to the nitrous oxide decomposition catalyst, as necessary.

Examples of the additive include a component that promotes the decomposition reaction of nitrous oxide, a component that controls the shape of the nitrous oxide decomposition catalyst, and a component that binds the nitrous oxide decomposition catalysts to each other.

Such an additive is not particularly limited as long as the additive is the one generally used in a nitrous oxide decomposition catalyst. Examples of the additive include silicate, titanate, aluminate, and zirconate.

The blending amount of the additive is not particularly limited as long as it does not reduce the activity of the catalyst. The blending amount of the additive is, for example, 50 parts by mass or less, preferably 30 parts by mass or less, more preferably 20 parts by mass or less, even more preferably 10 parts by mass or less, particularly preferably 5 parts by mass or less, and most preferably 3 parts by mass or less with respect to 100 parts by mass of the nitrous oxide decomposition catalyst. When an additive is contained, the blending amount of the additive is, for example, 0.1 parts by mass or more, preferably 0.3 parts by mass or more, and more preferably 0.5 parts by mass or more with respect to 100 parts by mass of the nitrous oxide decomposition catalyst.

The shape of the nitrous oxide decomposition catalyst is not particularly limited, and examples thereof include powders, granules, spheres, pellets, extruded bodies, and tablets.

The nitrous oxide decomposition catalyst can also be used, for example, by coating it on a honeycomb carrier.

Examples of the material of the honeycomb carrier include an inorganic fiber sheet (for example, glass paper (glass nonwoven fabric)), cordierite, silicon carbide, mullite, alumina, zirconia, titania, titanium phosphate, aluminum titanate, petalite, spodumene, aluminosilicate, and magnesium silicate. Examples of a method of coating to glass paper (glass nonwoven fabric) which is a honeycomb carrier include the method described in Patent No. 5909436.

The decomposition rate of nitrous oxide (N₂O) in the nitrous oxide decomposition catalyst is, for example, more than 55.0%, preferably 58.0% or more, more preferably 60.0% or more, even more preferably 65.0% or more, particularly preferably 70.0% or more, and most preferably 80.0% or more.

The decomposition rate of nitrous oxide (N₂O) in the nitrous oxide decomposition catalyst can be obtained by the following formula. The nitrous oxide decomposition catalyst is brought into contact with the exhaust gas in a reactor, as detailed in Examples below. That is, the N₂O concentration at the feed port of the reactor is the N₂O concentration of the exhaust gas prior to the contact with the nitrous oxide decomposition catalyst. The N₂O concentration at the discharge port of the reactor is the N₂O concentration of the exhaust gas after the contact with the nitrous oxide decomposition catalyst.

N₂O decomposition rate (%) = (N₂O concentration at the feed port of the reactor -N₂O concentration at the discharge port of the reactor)/(N₂O concentration at the feed port of the reactor) × 100.

The decomposition rate of nitrous oxide (N₂O) after the durability against sulfur dioxide (SO₂) test in the nitrous oxide decomposition catalyst is, for example, 40.0% or more, preferably 42.0% or more, more preferably 45.0% or more, even more preferably 50.0% or more, and particularly preferably 51.0% or more.

Because the decomposition rate of nitrous oxide (N₂O) after the sulfur dioxide (SO₂) durability test in the nitrous oxide decomposition catalyst is the above-described lower limit or more, the nitrous oxide decomposition catalyst has durability against sulfur dioxide (SO₂). Specifically, even after the nitrous oxide decomposition catalyst is exposed to a sulfur dioxide (SO₂)-containing gas (described later), the nitrous oxide decomposition catalyst can sufficiently decompose the nitrous oxide in exhaust gas under the conditions that the exhaust gas has a relatively low temperature and contains moisture. That is, it is suggested that the nitrous oxide decomposition catalyst improves the decomposition rate of nitrous oxide in the exhaust gas under the conditions that the exhaust gas has a relatively low temperature and contains sulfur dioxide (SO2) and moisture.

The decomposition rate of nitrous oxide (N₂O) after the sulfur dioxide (SO₂) durability test in the nitrous oxide decomposition catalyst can be determined by the following formula. The nitrous oxide decomposition catalyst after the sulfur dioxide (SO₂) durability test is brought into contact with the exhaust gas in a reactor, as detailed in Examples below. That is, the N₂O concentration at the feed port of the reactor is the N₂O concentration of the exhaust gas prior to the contact with the nitrous oxide decomposition catalyst after the sulfur dioxide (SO₂) durability test. The N₂O concentration at the discharge port of the reactor is the N₂O concentration of the exhaust gas after the contact with the nitrous oxide decomposition catalyst after the sulfur dioxide (SO₂) durability test.

N₂O decomposition rate (%) after the sulfur dioxide (SO₂) durability test = (N₂O concentration at the feed port of the reactor - N₂O concentration at the discharge port of the reactor)/(N₂O concentration at the feed port of the reactor) × 100

As detailed in Examples below, the sulfur dioxide (SO₂) durability test is a test in which a nitrous oxide decomposition catalyst is exposed to a sulfur dioxide (SO₂)-containing gas (a gas containing N₂O: 100 ppmvd, O₂: 12% by volume, N₂: Balance, H₂O: 10% by volume, and SO₂: 10 ppmvd) for 8 hours.

### 2. Method of Producing Nitrous Oxide Decomposition Catalyst

Next, a method of producing a nitrous oxide decomposition catalyst is described.

Examples of the method of producing a nitrous oxide decomposition catalyst include a co-precipitation method, a citric acid complex method, an evaporation to dryness method, an impregnation method, and an alkoxide method, and preferably a co-precipitation method is used.

### <Method of Producing Nitrous Oxide Decomposition Catalyst of First Embodiment>

When the method of producing a nitrous oxide decomposition catalyst is a co-precipitation method, the first embodiment includes a preparation step of dissolving a cobalt salt, a nickel salt, and a salt containing an element of A in a solvent, a co-precipitation step of adding a co-precipitation agent to the prepared solution to co-precipitate the mixture to form a precipitate containing a compound represented by the formula (1), and a calcination step of calcining the precipitate.

### [Preparation Step]

In the preparation step, a cobalt salt, a nickel salt, and a salt containing an element of A are dissolved in a solvent.

Examples of the cobalt salt include an inorganic metal salt of cobalt. Examples of the inorganic metal salt of cobalt include cobalt nitrate, cobalt sulfate, and cobalt chloride, and preferably cobalt nitrate (Co (NO₃)₂·6H₂O) is used.

Examples of the nickel salt include an inorganic metal salt of nickel. Examples of the inorganic metal salt of nickel include nickel nitrate, nickel sulfate, and nickel chloride, and preferably nickel nitrate (Ni (NO₃)₂·6H₂O) is used.

Examples of the salt containing an element of A include an inorganic metal salt containing an element of A. Examples of the inorganic metal salt containing an element of A include nitrate containing an element of A, sulfate containing an element of A, and chloride containing an element of A, and preferably nitrates containing an element of A is used.

Specifically, when A is Fe, examples of the iron salt include an inorganic metal salt of iron. Examples of the inorganic metal salt of iron include, for example, iron nitrate, iron sulfate, and iron chloride, and preferably iron nitrate (Fe (NO₃)₃·9H₂O) is used.

Examples of the solvent include ion-exchange water and ultrapure water, and preferably ion-exchange water is used.

The cobalt salt can be added to the solvent so as to have a concentration of, for example, 0.02 mol/L or more, preferably 0.2 mol/L or more, and for example, 20 mol/L or less, preferably 2 mol/L or less.

The nickel salt can be added to the solvent so as to have a concentration is, for example, 0.01 mol/L or more, preferably 0.1 mol/L or more, and for example, 10 mol/L or less, preferably 1 mol/L or less.

The salt containing an element of A can be added to the solvent so as to have a concentration of, for example, 0.01 mol/L or more, preferably 0.1 mol/L or more, and, for example, 10 mol/L or less, preferably 1 mol/L or less.

Furthermore, the cobalt salt, the nickel salt, and the salt containing an element of A are added to the solvent and dissolved therein so as to satisfy the composition ratio in the compound represented in the formula (1).

In this manner, a solution in which a cobalt salt, a nickel salt, and a salt containing an element of A are dissolved in a solvent can be obtained.

### [Co-precipitation Step]

A co-precipitation agent is added to the prepared solution, and the mixture is coprecipitated to form a precipitate containing the compound represented by the formula (1) in the solution, and the precipitate is washed.

As the co-precipitation agent, for example, an alkaline liquid and an alkaline solid can be used. Specifically, examples thereof include K₂CO₃, aqueous NH₃, and NaOH, and preferably K₂CO₃ is used.

The co-precipitation agent may be added to the extent that a precipitate is formed in the solution, and, for example, is added dropwise until the pH of the solution reaches 9. By the adding dropwise, a precipitate is formed. The co-precipitation agent may be added at room temperature.

Next, the obtained precipitate is collected.

The collection method is not particularly limited, and the precipitate can be collected, for example, by removing the solvent by filtration and using an aspirator.

The precipitate after the collection is, as necessary, washed and dried.

The washing method is not particularly limited, and examples thereof include a method of repeatedly washing the precipitate with ion-exchange water until the pH reaches 7.

The method of drying the precipitate after the washing is not particularly limited, and examples thereof include a method such as evaporation to dryness. In this manner, the washed precipitate can be obtained as a dry powder.

The drying temperature is, for example, 70°C or more, preferably 90°C or more, and, for example, 120°C or less. The drying time is, for example, 6 hours or more, and for example, 100 hours or less, preferably 50 hours or less, more preferably 24 hours or less.

In this manner, a precipitate (dry powder) containing the compound represented by the formula (1) can be obtained.

### [Calcination Step]

A precipitate (dry powder) containing the compound represented by the formula (1) is calcined.

The calcination method is not particularly limited, and a known method can be used as long as the desired catalyst can be obtained.

The calcination temperature is, for example, 300°C or more, preferably 350°C or more, and, for example, 800°C or less, preferably 700°C or less, more preferably 600°C or less, and even more preferably 500°C or less. The calcination time is, for example, 0.5 hours or more, preferably 1 hour or more, and, for example, 12 hours or less, preferably 6 hours or less, more preferably 4 hours or less, and even more preferably 3 hours or less.

When the calcination temperature and time are within the above ranges, an oxide can be produced without a reduction in activity.

In this manner, a catalyst containing the compound represented by formula (1) can be obtained.

### <Method of Producing Nitrous Oxide Decomposition Catalyst of Second Embodiment>

When the method of producing the nitrous oxide decomposition catalyst is a co-precipitation method, the above-described second embodiment includes a preparation step of dissolving a cobalt salt, a magnesium salt, and a salt containing an element of B in a solvent, a co-precipitation step of adding a co-precipitation agent to the prepared solution to co-precipitate the mixture to form a precipitate containing the compound represented by the formula (2), and a calcination step of calcining the precipitate.

In the method of producing the nitrous oxide decomposition catalyst of the second embodiment, the descriptions of the same steps (co-precipitation step and calcination step) as in the method of producing the nitrous oxide decomposition catalyst of the first embodiment are omitted. In other words, only the preparation process is described below.

### [Preparation Step]

In the preparation step, a cobalt salt, a magnesium salt, and a salt containing an element of B are dissolved in a solvent.

Examples of the cobalt salt include the cobalt salts cited in the production method of the nitrous oxide decomposition catalyst of the first embodiment.

Examples of the magnesium salt include an inorganic metal salt of magnesium. Examples of the inorganic metal salt of magnesium include magnesium nitrate, magnesium sulfate, and magnesium chloride, and preferably magnesium nitrate (Mg (NO₃)₂·6H₂O) is used.

Examples of the salt containing an element of B include an inorganic metal salt containing an element of B. Examples of the inorganic metal salt containing an element of B include nitrate containing an element of B, sulfate containing an element of B, and chloride containing an element of B, and preferably nitrate containing an element of B is used.

Specifically, when B is Zn, examples of the zinc salt include an inorganic metal salt of zinc. Examples of the inorganic metal salt of zinc include zinc nitrate, zinc sulfate, and zinc chloride, preferably zinc nitrate (Zn (NO₃)₂·6H₂O) is used.

Examples of the solvent include the same solvents as those cited in the method of producing the nitrous oxide decomposition catalyst of the first embodiment.

The cobalt salt can be added to the solvent so as to have a concentration of, for example, 0.02 mol/L or more, preferably 0.2 mol/L or more, and, for example, 20 mol/L or less, preferably 2 mol/L or less.

The magnesium salt may be added to the solvent so as to have a concentration of, for example, 0.01 mol/L or more, preferably 0.1 mol/L or more, and, for example, 10 mol/L or less, preferably 1 mol/L or less.

The salt containing an element of B can be added to the solvent so as to have a concentration of, for example, 0.01 mol/L or more, preferably 0.1 mol/L or more, and, for example, 10 mol/L or less, preferably 1 mol/L or less.

Furthermore, the cobalt salt, the magnesium salt, and the salt containing an element of B are added to the solvent and dissolved therein so as to satisfy the composition ratio represented in the compound of the formula (2).

In this manner, a solution in which a cobalt salt, a magnesium salt, and a salt containing an element of B are dissolved in a solvent can be obtained.

### 3. Method of Decomposing Nitrous Oxide (method of using nitrous oxide decomposition catalyst)

Next, a method of decomposing nitrous oxide is described.

The method of decomposing nitrous oxide includes, for example, a step of decomposing nitrous oxide in exhaust gas by using the above-described nitrous oxide decomposition catalyst.

Specifically, as a method of decomposing nitrous oxide, the above-described nitrous oxide decomposition catalyst is charged into a reactor, and exhaust gas containing nitrous oxide (N₂O) is supplied from the feed port of the reactor to bring the nitrous oxide in the exhaust gas into contact with the nitrous oxide decomposition catalyst, thereby decomposing the nitrous oxide (N₂O) into nitrogen (N₂) and oxygen (O₂). The exhaust gas after the decomposition is discharged from the discharge port of the reactor.

The charge amount of the nitrous oxide decomposition catalyst is not particularly limited, and can be adjusted, for example, according to the supply amount of the exhaust gas and the concentration of nitrous oxide contained in the exhaust gas.

The exhaust gas includes, for example, N₂O, O₂, and H₂O. It may also contain N₂.

The concentration of N₂O in the exhaust gas is not particularly limited, and is, for example, 10 ppmvd or more, preferably 30 ppmvd or more, more preferably 50 ppmvd or more, even more preferably 80 ppmvd or more, and, for example, 50000 ppmvd or less, preferably 10000 ppmvd or less, more preferably 5000 ppmvd or less, even more preferably 1000 ppmvd or less. The term "ppmvd" indicates parts per million by volume of a dry gas.

The concentration of O₂ in the exhaust gas is, for example, 3% by volume or more, preferably 5% by volume or more, more preferably 8% by volume or more, even more preferably 10% by volume or more, and, for example, 30% by volume or less, preferably 25% by volume or less, more preferably 20% by volume or less, even more preferably 15% by volume or less.

The concentration of H₂O in the exhaust gas is, for example, 1% by volume or more, preferably 3% by volume or more, more preferably 5% by volume or more, even more preferably 8% by volume or more, and, for example, 30% by volume or less, preferably 25% by volume or less, more preferably 20% by volume or less, even more preferably 15% by volume or less, and particularly preferably 12% by volume or less.

The above-described nitrous oxide decomposition catalyst can sufficiently decompose the nitrous oxide even when the exhaust gas contains moisture within the above-described range.

The supply amount of the exhaust gas is not particularly limited.

The specific ventilation SV (ventilation amount per catalyst volume) is, for example, 1,000 h⁻¹ or more, preferably 3,000 h⁻¹ or more, more preferably 5,000 h⁻¹ or more, even more preferably 8,000 h⁻¹ or more, and is, for example, 50,000 h⁻¹ or less, preferably 30,000 h⁻¹ or less, more preferably 20,000 h⁻¹ or less, even more preferably 15,000 h⁻¹ or less.

The decomposition temperature of the nitrous oxide is, for example, 200°C or more, preferably 250°C or more, more preferably 300°C or more, even more preferably 350°C or more, and, for example, 700°C or less, preferably 600°C or less, more preferably 500°C or less, even more preferably 450°C or less, and particularly preferably 400°C or less.

The above-described nitrous oxide decomposition catalyst can sufficiently decompose nitrous oxide even under the condition of a relatively low temperature as described above. The above-described temperature of the nitrous oxide decomposition is the temperature of the exhaust gas in the reactor.

### <Operations and Effects>

The nitrous oxide decomposition catalyst of the present invention can sufficiently decompose the nitrous oxide in exhaust gas under the condition of a relatively low temperature even when the exhaust gas contains moisture.

Furthermore, the method of decomposing nitrous oxide of the present invention uses the nitrous oxide decomposition catalyst of the present invention, and thus can sufficiently decompose the nitrous oxide in exhaust gas under the condition of a relatively low temperature even when the exhaust gas contains moisture.

### <Applications>

The above-described nitrous oxide decomposition catalyst can be used as one of catalysts for decomposing harmful substances in exhaust gas by being disposed in an exhaust passage through which exhaust gas flows. Such a nitrous oxide decomposition catalyst can sufficiently decompose nitrous oxide under the condition of a relatively low temperature when the exhaust gas has moisture that may be normally contained therein. Therefore, it is possible to omit the step of removing the moisture of the exhaust gas and the step of adjusting the temperature of the exhaust gas. Such a nitrous oxide decomposition catalyst is used in the decomposition treatment of the nitrous oxide of the exhaust gas discharged, for example, from chemical plants, marine engines of LNG fuels mixed with NH₃, heavy oil fuels, methane fuels and methanol fuels, and thermal power plants using fuels mixed with NH₃.

### Examples

In reference to Examples and Comparative Examples below, the present invention is more specifically described. The present invention is however not limited by Examples and Comparative Examples in any manner. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### Example 1

### <Preparation of Nitrous Oxide Decomposition Catalyst>

Nickel nitrate (Ni (NO₃)₂·6H₂O), iron nitrate (Fe (NO₃)₃·9H₂O), and cobalt nitrate (Co (NO₃)₂·6H₂O) were weighed so that the composition ratio (atomic ratio) was Ni_{0.9}Fe_{0.1}Co₂O₄, and then dissolved in ion-exchange water. Next, while the solution was being stirred, 15% by mass of K₂CO₃ was added dropwise at 10mL/min until the pH reached 9, thereby producing a precipitate. The precipitate was filtered and washed with ion-exchange water. The filtration and wash were repeated until the pH of the ion-exchange water used for the wash reached 7. The precipitate after the wash was collected, dried at 100°C for 12 hours, and calcined at 400°C for 2 hours, thereby producing the nitrous oxide decomposition catalyst of Example 1. The nitrous oxide decomposition catalyst was pulverized and formed into pellets.

### Examples 2 to 19 and Comparative Example 1

The nitrous oxide decomposition catalyst of each of Examples and Comparative Example 1 was obtained in the same manner as in Example 1 except that each nitrate salt was weighed so that each nitrous oxide decomposition catalyst had the composition and composition ratio showed in Tables 1 to 3.

### Comparative Example 2

### <Preparation of Nitrous Oxide Decomposition Catalyst>

Nickel nitrate (Ni (NO₃)2·6H₂O), iron nitrate (Fe (NO₃)₃·9H₂O), and cobalt oxide (Co₃O₄) were weighed so that the composition ratio (atomic ratio) was Ni:Fe:Co = 0.75:0.25: 3, and then mixed together. The mixture was dried at 120°C for 2 hours and calcined at 400°C for 4 hours to obtain the nitrous oxide decomposition catalyst of Comparative Example 2. The nitrous oxide decomposition catalyst was formed into pellets.

### <Evaluations>

### [Evaluation of Nitrous Oxide Decomposition]

3.2g of the nitrous oxide decomposition catalyst (pelletized) of each of Examples and Comparative Examples was charged into a reactor. An exhaust gas was assumed, and air, N₂, and N₂O were mixed together so that the mixture had the following gas composition, and then the mixture was introduced into an evaporator. Furthermore, H₂O was introduced into the evaporator so that the mixture had the following water content. In the evaporator, all the gases (including H₂O) were mixed together and fed to the reactor at 2.8NL/min-wet, and the temperature of the reactor (the temperature of the gas in the reactor) was increased to 400°C by heating with an electric heater. The specific ventilation SV (ventilation amount per catalyst volume) was set to 10,811 h⁻¹. The N₂O concentration was measured at the feed port and discharge port of the reactor by using an N₂O meter, and the decomposition rate of N₂O was calculated from the following formula. The results are shown in Tables 1 to 3.

### {Gas Composition}

N₂O: 100 ppmvd
O₂: 12% by volume
N₂: Balance
H₂O: 10% by volume

### {Decomposition Rate of N₂O}

N₂O decomposition rate (%) = (N₂O concentration at the feed port of the reactor - N₂O concentration at the discharge port of the reactor)/(N₂O concentration at the feed port of the reactor) × 100.

### [Evaluation of Nitrous Oxide Decomposition after Sulfur Dioxide (SO2) Resistance Test]

3.2g of the nitrous oxide decomposition catalyst (pelletized) of each of Examples and Comparative Examples was charged into a reactor.

### (SO₂ Durability Test)

Next, air, N₂, N₂O, and SO₂ were mixed together so that the mixture had the following composition, and introduced into an evaporator. Furthermore, H₂O was introduced into the evaporator so that the mixture had the following water content. In the evaporator, all the gases (including H₂O) were mixed together to prepare a sulfur dioxide (SO₂)-containing gas. Then, the sulfur dioxide (SO₂)-containing gas was fed to the reactor at 2.8NL/min-wet, and the temperature of the reactor (the temperature of the gas in the reactor) was increased to 400°C by heating with an electric heater. The specific ventilation SV (ventilation amount per catalyst volume) was set to 10,811 h⁻¹. The sulfur dioxide (SO₂)-containing gas was also fed for 8 hours. In other words, the nitrous oxide decomposition catalyst of each of Examples and Comparative Examples was exposed to the sulfur dioxide (SO₂)-containing gas for 8 hours.

### {Sulfur Dioxide (SO₂)-containing Gas Composition}

N₂O: 100 ppmvd
O₂: 12% by volume
N₂: Balance
SO₂: 10 ppmvd
H₂O: 10% by volume

With respect to the nitrous oxide decomposition catalyst of each of Examples and Comparative Examples after the SO₂ durability test, the decomposition rate of nitrous oxide was evaluated in the same manner as described above. The results are shown in Table 4.

### [Evaluation of X-ray Diffraction Pattern]

With respect to the nitrous oxide decomposition catalyst of each of Examples 1, 5, 7, 12, 14, and Comparative Example 2, the X-ray diffraction (XRD) pattern was measured by using Uitima IV (manufactured by Rigaku).

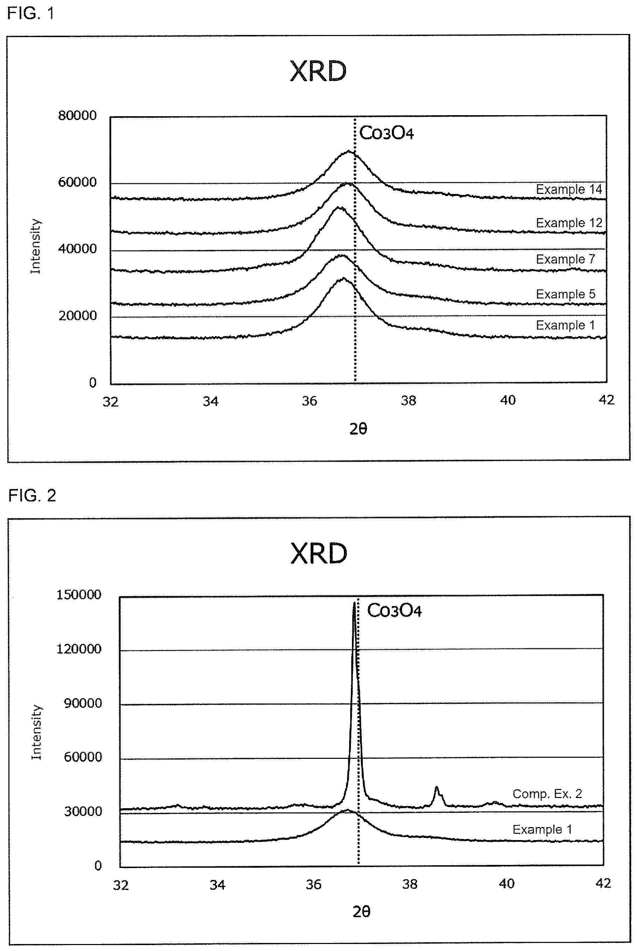

The measurement conditions were a tube voltage 40 kV and a tube current 40 mA. Furthermore, to align the peak positions, Si was mixed as a standard material, and the correction was carried out at 20=28.44 of Si. The results are shown in FIG. 1 and FIG. 2. FIG. 1 shows XRD patterns of Examples 1, 5, 7, 12, and 14, and FIG. 2 shows XRD patterns of Example 1 and Comparative Example 2.

### [Table 1]

**Table1**

| | Composition | X | N₂O decomposition rate (%) |
|---|---|---|---|
| Ex. 1 | Ni_{X}Fe_{1-X}Co₂O₄ | 0.90 | 90.2 |
| Ex. 2 | | 0.75 | 75.6 |
| Ex. 3 | Ni_{X}Ce_{1-X}Co₂O₄ | 0.75 | 85.8 |
| Ex. 4 | Ni_{X}Mn_{1-X}Co₂O₄ | 0.90 | 84.1 |
| Ex. 5 | | 0.75 | 69.5 |
| Ex. 6 | Ni_{X}Sr_{1-X}Co₂O₄ | 0.90 | 79.1 |
| Ex. 7 | | 0.75 | 76.7 |
| Ex. 8 | Ni_{X}Cs_{1-X}Co₂O₄ | 0.25 | 91.3 |
| Ex. 9 | Ni_{X}Ba_{1-X}Co₂O₄ | 0.75 | 69.2 |
| Ex. 10 | Ni_{X}Ca_{1-X}Co₂O₄ | 0.75 | 64.4 |
| Comp. Ex. 1 | Ni_{X}Cu_{1-X}Co₂O₄ | 0.75 | 55.0 |
| Comp. Ex. 2 | 1) | | 1.6 |

| | | | |
|---|---|---|---|
| 1) Mixture of nickel nitrate (Ni(NO₃)₂•6H₂O), iron nitrate (Fe(NO₃)₃•9H₂O), and cobalt oxide (Co₃O₄)in a composition ratio (atomic ratio) of Ni:Fe:Co=0.75:0:25:3 | | | |

### [Table 2]

**Table2**

| | Composition | Y | N₂O decomposition rate (%) |
|---|---|---|---|
| Ex. 11 | Mg_{Y}Zn_{1-Y}Co₂O₄ | 0.95 | 82.2 |
| Ex. 12 | | 0.90 | 81.1 |
| Ex. 13 | | 0.75 | 64.8 |
| Ex. 14 | Mg_{Y}Ni_{1-Y}Co₂O₄ | 0.90 | 72.8 |
| Ex. 15 | | 0.75 | 71.5 |
| Ex. 16 | Mg_{Y}Fe_{1-Y}Co₂O₄ | 0.75 | 59.3 |
| Ex. 17 | Mg_{Y}Sr_{1-Y}Co₂O₄ | 0.75 | 56.5 |

### [Table 3]

**Table 3**

| | Composition | X | N₂O decomposition rate (%) |
|---|---|---|---|
| Ex. 18 | Ni_{X}La_{1-X}Co₂O₄ | 0.75 | 79.1 |
| Ex. 19 | Ni_{X}Zr_{1-X}Co₂O₄ | 0.75 | 87.6 |

### [Table 4]

**Table 4**

| | Composition | X or Y | N₂O decomposition rate (%) after SO₂ durability test |
|---|---|---|---|
| Ex. 1 | Ni_{X}Fe_{1-X}Co₂O₄ | 0.90 | 58.5 |
| Ex. 2 | | 0.75 | 51.6 |
| Ex. 4 | Ni_{X}Mn_{1-X}Co₂O₄ | 0.90 | 42.1 |
| Ex. 6 | Ni_{X}Sr_{1-X}Co₂O₄ | 0.90 | 50.0 |
| Ex. 7 | | 0.75 | 51.8 |
| Ex. 8 | Ni_{X}Cs_{1-X}Co₂O₄ | 0.25 | 41.1 |
| Ex. 12 | Mg_{Y}Zn_{1-Y}Co₂O₄ | 0.90 | 60.8 |
| Ex. 14 | Mg_{Y}Ni_{1-Y}Co₂O₄ | 0.90 | 45.0 |
| Ex. 15 | | 0.75 | 71.7 |
| Ex. 18 | Ni_{X}La_{1-X}Co₂O₄ | 0.75 | 71.0 |
| Comp. Ex. 1 | Ni_{X}Cu_{1-X}Co₂O₄ | 0.75 | 39.6 |

### <Consideration>

As shown in FIG. 1, all the catalysts of Examples have diffraction peaks at the positions shifted from the diffraction peak position caused by the spinel structure of Co₃O₄ to the positions on the side where 20 decreases. That is, it was suggested that a nitrous oxide decomposition catalyst containing a compound represented by NixA_{1-X}Co₂O₄ and a nitrous oxide decomposition catalyst containing a compound represented by Mg_{Y}B_{1-Y}Co₂O₄ existed in a state in which some of Co elements of Co₃O₄ were substituted with any one of the ions, and the elements formed a solid solution. The nitrous oxide decomposition catalysts described in Examples 1 to 19 were able to improve the decomposition rate of nitrous oxide under the conditions that the exhaust gas had a relatively low temperature and contained moisture.

As shown in FIG. 2, Comparative Example 2 has a diffraction peak at almost the same position as that of the diffraction peak caused by the spinel structure of Co₃O₄. That is, it was suggested that the nitrous oxide decomposition catalyst of Comparative Example 2 did not form a solid solution. The nitrous oxide decomposition catalyst of Comparative Example 2 showed a low decomposition rate of nitrous oxide under the conditions that the exhaust gas had a relatively low temperature and contained moisture. Furthermore, Comparative Example 1 was a nitrous oxide decomposition catalyst containing cobalt, nickel, and copper, and showed a relatively low decomposition rate of nitrous oxide under the conditions that the exhaust gas had a relatively low temperature and contained moisture.

Furthermore, the nitrous oxide decomposition catalysts of Examples 1, 2, 4, 6 to 8, 12, 14, 15, and 18 were able to improve the decomposition rate of nitrous oxide under the conditions that the exhaust gas had a relatively low temperature and contained moisture, even after the above-described SO₂ durability test. That is, it was suggested that a nitrous oxide decomposition catalyst containing a compound represented by NixA_{1-X}Co₂O₄, of which A contained at least one selected from the group consisting of Fe, Mn, Sr, Cs, and La, and a nitrous oxide decomposition catalyst containing a compound represented by Mg_{Y}B_{1-Y}Co₂O₄, of which B contains at least one selected from the group consisting of Zn and Ni, were able to improve the decomposition rate of nitrous oxide even under the conditions that the exhaust gas had a relatively low temperature and contained sulfur dioxide (SO2) and moisture.

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

### Industrial Applicability

The nitrous oxide decomposition catalyst of the present invention is used in the decomposition treatment of the nitrous oxide of the exhaust gas discharged, for example, from chemical plants, marine engines of LNG fuels mixed with NH₃, heavy oil fuels, methane fuels and methanol fuels, and thermal power plants using fuels mixed with NH₃.

## Claims

1. A nitrous oxide decomposition catalyst comprising: a compound represented by the following formula (1).
Ni_{X}A_{1-X}Co₂O₄ (1)
(In the formula (1), A is at least one selected from the group consisting of Fe, Mn, Ce, Zr, La, an alkali metal, and an alkaline earth metal. X is more than 0 and less than 1.)

2. The nitrous oxide decomposition catalyst according to claim 1, wherein in the formula (1), X is 0.75 or more.

3. The nitrous oxide decomposition catalyst according to claim 1, wherein the A is at least one selected from the group consisting of Fe, Mn, Sr, Cs, and La.

4. A nitrous oxide decomposition catalyst comprising: a compound represented by the following formula (2).
Mg_{Y}B_{1-Y}Co₂O₄ (2)
(In the formula (2), B is at least one selected from the group consisting of Fe, Mn, Zn, Ni, Zr, La, an alkali metal, and an alkaline earth metal (excluding Mg). Y is more than 0 and less than 1.)

5. The nitrous oxide decomposition catalyst according to claim 4, wherein in the formula (2), Y is 0.75 or more.

6. The nitrous oxide decomposition catalyst according to claim 4, wherein the B is at least one selected from the group consisting of Zn and Ni.

7. A method of decomposing nitrous oxide comprising: a step of decomposing nitrous oxide in exhaust gas by using the nitrous oxide decomposition catalyst according to any one of claims 1 to 6.

8. The method of decomposing nitrous oxide according to claim 7,
wherein a concentration of H₂O in the exhaust gas is 5% by volume or more, and
wherein in the step of decomposing nitrous oxide, a decomposition temperature is 450°C or less.
